# EUROPÄISCHE PATENTSCHRIFT

(11) **EP 3 976 316 B1**
(45) Veröffentlichungstag und Bekanntmachung des Hinweises auf die Patenterteilung: **21.08.2024**
(21) Anmeldenummer: 20726814.5
(22) Anmeldetag: 18.05.2020
(51) Int. Cl.: B24B 23/02, B25F 5/02

(54) **HANDWERKZEUGMASCHINE**
HAND-HELD POWER TOOL
MACHINE-OUTIL PORTATIVE

(30) Priorität: 29.05.2019 DE 102019207973
(43) Veröffentlichungstag der Anmeldung: 06.04.2022
(73) Patentinhaber: Robert Bosch GmbH, 70442 Stuttgart (DE)
(72) Erfinder: LUTZ, Manfred, 70794 Filderstadt (DE); FEDER, Elmar, 71229 Leonberg (DE); SCHNEIDER, Dietmar, 73770 Denkendorf (DE)
(86) Internationale Anmeldenummer: PCT/EP2020/063813
(87) Internationale Veröffentlichungsnummer: WO 2020/239498

(56) Entgegenhaltungen:
- WO-A1-2010/087235
- DE-A1- 102008 000 728
- DE-A1- 102012 223 969

## Beschreibung

Die Erfindung bezieht sich auf eine Handwerkzeugmaschine nach dem Oberbegriff des Anspruchs 1.

### Stand der Technik

In der DE 10 2015 221 682 A1 wird ein Motoradapter für eine Elektrowerkzeugmaschine offenbart, der zu einer geometrischen Anpassung eines Elektromotors an ein Motorgehäuse vorgesehen ist, mit einem Grundkörper, welcher einen Statoraufnahmebereich aufweist, der zumindest teilweise zu einer Aufnahme eines Stators des Elektromotors vorgesehen ist.

Eine Handwerkzeugmaschine nach dem Oberbegriff des Anspruchs 1 ist aus WO 2010/087235 A1 bekannt.

### Offenbarung der Erfindung

Der Erfindung liegt die Aufgabe zugrunde, mit einfachen konstruktiven Maßnahmen eine Handwerkzeugmaschine oder eine Handwerkzeugmaschinenvorrichtung zu verbessern.

Die Aufgabe wird gelöst mit einer Handwerkzeugmaschine nach Anspruch 1.

Erfindungsgemäß wird vorgeschlagen, dass die Lagereinheit in das erste Gehäuseteil hineinragt.

Hierdurch kann eine besonders kompakte Handwerkzeugmaschine bereitgestellt werden. Dadurch dass sich die Lagereinheit in das erste Gehäuseteil hineinragt, kann die gesamte Antriebseinheit kompakter ausgeführt sein, indem beispielsweise eine kürzere Antriebswelle gewählt werden kann und zudem eine Lageranordnung zur Lagerung der Antriebswelle, insbesondere vollständig, in dem ersten Gehäuseteil angeordnet sein kann. Aufgrund der in das erste Gehäuseteil hineinragenden Lagereinheit kann die Antriebseinheit weiter in Richtung erstes Gehäuseteil verschoben werden, wodurch der zweite Gehäuseteil flexibler gestaltet werden kann und somit eine Ergonomie erhöht werden kann.

Die Handwerkzeugmaschine kann als ein Winkelschleifer ausgebildet sein. Es versteht sich, dass die Handwerkzeugmaschine auch als eine andere einem Fachmann als sinnvoll erscheinende Handwerkzeugmaschine, wie beispielsweise ein Bohrschrauber, ein Bohrhammer, eine Handfräse oder dgl., ausgebildet sein kann. Die Handwerkzeugmaschine kann als handgehaltene, tragbare Handwerkzeugmaschine ausgebildet sein, welche mit einer Hand eines Bedieners gehalten werden soll. Die Handwerkzeugmaschine soll ein Gewicht von vorzugsweise 40 kg, bevorzugt von 20 kg, besonders bevorzugt von 10 kg, nicht übersteigen.

Unter einer "Antriebseinheit" soll in diesem Zusammenhang insbesondere eine Einheit verstanden werden, die dazu vorgesehen ist, zumindest ein Antriebsmoment zu erzeugen und zur Weiterleitung an eine Abtriebseinheit insbesondere an ein Einsatzwerkzeug zur Verfügung zu stellen. Vorteilhaft weist die Handwerkzeugmaschine die Antriebseinheit auf. Besonders vorteilhaft weist die Antriebseinheit zumindest einen Elektromotor auf. Die Antriebseinheit kann eine Antriebswelle aufweisen. Die Antriebseinheit kann als ein elektronisch kommutierter oder als ein Bürsten-kommutierter Motor ausgebildet sein. Insbesondere ist die Antriebseinheit mit einer Abtriebseinheit verbunden. Die Abtriebseinheit kann eine Aufnahme zur Aufnahme eines Werkzeugs, insbesondere eines Einsatzwerkzeugs, aufweisen, welches dazu vorgesehen ist, eine Arbeitsbewegung auf ein zu bearbeitendes Werkstück zu übertragen. Dabei kann die Antriebseinheit beispielsweise eine rotatorische Bewegung auf eine translatorische und/oder rotatorische Bewegung des Werkzeugs, insbesondere des Einsatzwerkzeugs, übertragen.

Insbesondere bildet das Maschinengehäuse ein Außengehäuse der Handwerkzeugmaschine. Das Maschinengehäuse ist dazu vorgesehen, von einem Bediener umgriffen zu werden. Das Maschinengehäuse kann ein erstes Gehäuseteil aufweisen, welches als ein Getriebegehäuse ausgebildet ist. Das Getriebegehäuse kann eine Getriebeeinheit umgeben. Das Getriebegehäuse kann aus einem Metall wie beispielsweise einem Eisenwerkstoff gebildet sein. Das Maschinegehäuse kann ein zweites Gehäuseteil aufweisen, welches als ein Motorgehäuse und/oder als ein Griffgehäuse ausgebildet ist. Das Motorgehäuse kann eine Antriebseinheit aufnehmen und lagern. Das Griffgehäuse kann dazu vorgesehen sein, einen Griffbereich zum Umgreifen der Handwerkzeugmaschine durch einen Bediener zu bilden.

Die Antriebseinheit weist insbesondere eine Antriebswelle auf. Die Antriebswelle ist dazu vorgesehen, sich entlang einer Antriebsachse zu erstrecken und um die Antriebsachse zu drehen. Die Antriebseinheit weist einen Antriebsrotor auf, welcher die Antriebsachse antreibt oder diese bildet. Die Antriebseinheit weist einen Antriebsstator auf. Der Antriebsstator ist drehfest in dem Maschinengehäuse, insbesondere dem zweiten Gehäuseteil, gelagert.

Unter hineinragen soll insbesondere verstanden werden, dass die Lagereinheit in einem montierten Zustand der Handwerkzeugmaschine zumindest teilweise in dem ersten Gehäuseteil angeordnet ist. Insbesondere schneidet eine Radialebene der Antriebsachse, welche entlang einer Schnittstelle des ersten und des zweiten Gehäuseteils verläuft, die Lagereinheit. Insbesondere ragt die Lagereinheit mindestens 2 mm, insbesondere mindestens 4 mm, vorzugsweise mindestens 6 mm, bevorzugt mindestens 8 mm, besonders bevorzugt mindestens 10 mm, weiter bevorzugt mindestens 12 mm, in das erste Gehäuseteil hinein.

Die Lagereinheit kann ein Lagergehäuse aufweisen. Das Lagergehäuse kann als ein Lagerdeckel bzw. als ein Lagerschild ausgebildet sein. Das Lagergehäuse kann dazu vorgesehen sein, die Antriebseinheit, insbesondere in axialer und/oder radialer Richtung der Antriebsachse, gegenüber dem Maschinengehäuse zu lagern. Erfindungsgemäß ist die Lagereinheit dazu vorgesehen, die Antriebseinheit drehfest mit dem Maschinengehäuse, insbesondere dem ersten Gehäuseteil und/oder dem zweiten Gehäuseteil zu verbinden.

Insbesondere ist die Lagereinheit dazu vorgesehen, die Antriebseinheit gegenüber der Getriebeeinheit auszurichten bzw. zu positionieren.

Insbesondere weist die Handwerkzeugmaschine eine Handwerkzeugmaschinenvorrichtung auf, welche als Antriebseinheitslagerung ausgebildet ist. Die Handwerkzeugmaschinenvorrichtung ist dazu vorgesehen, die Antriebseinheit in dem Gehäuse, insbesondere dem Maschinengehäuse, zu lagern.

Die Unteransprüche geben weitere zweckmäßige Weiterbildungen der erfindungsgemäßen Handwerkzeugmaschine und/oder der Handwerkzeugmaschinenvorrichtung an.

Es kann zweckmäßig sein, dass das erste Gehäuseteil und/oder das zweite Gehäuseteil die Lagereinheit, insbesondere in axialer Richtung, und, insbesondre vollständig, überlappen. Insbesondere kann das erste Gehäuseteil die Lagereinheit, insbesondere in axialer Richtung, überlappen. Vorzugsweise ist die Lagereinheit innenliegend, d.h. von dem Maschinengehäuse, insbesondere vollständing, umgeben. Insbesondere ist die Lagereinheit von dem ersten Gehäuseteil und/oder dem zweiten Gehäuseteil umgeben.

Ferner kann es zweckmäßig sein, dass die Lagereinheit zwischen dem ersten Gehäuseteil und dem zweiten Gehäuseteil gelagert ist, insbesondere in axialer Richtung vorgespannt ist. Insbesondere ist die Lagereinheit in axialer Richtung der Antriebsachse gegenüber dem ersten Gehäuseteil und dem zweiten Gehäuseteil angestellt bzw. vorgespannt. Alternativ kann die Lagereinheit auch in einem der beiden Gehäuseteile angestellt bzw. vorgespannt sein.

Insbesondere ist die Lagereinheit, insbesondere das Lagergehäuse, form- und/oder kraftschlüssig mit der Antriebseinheit, insbesondere einem Antriebsstator der Antriebseinheit, verbunden.

Es kann zweckmäßig sein, dass das Lagergehäuse topfförmig ausgebildet ist. Insbesondere umgibt das Lagergehäuse zumindest teilweise die Antriebseinheit, insbesondere den Antriebsstator.

Bevorzugt ist die Lagereinheit dazu vorgesehen, sich in axialer Richtung in einem radial innenliegenden Bereich an dem ersten Gehäuseteil und in einem radial außenliegenden Bereich an dem zweiten Gehäuseteil abzustützen. Insbesondere schneidet eine Radialebene der Antriebsachse, welche entlang der Schnittstelle des ersten und des zweiten Gehäuseteils verläuft, die Lagereinheit. Die Lagereinheit weist einen radial innnenliegenden Bereich und einen radial außenliegenden Bereich auf. Der radial innenliegende Bereich ist zumindest teilweise hohlzylindrisch ausgebildet. Der radial innenliegende Bereich bildet einen im Wesentlichen hohlzyindrischen Innenteilkörper. Der radial außenliegende Bereich bildet einen im Wesentlichen hohlzylindrischen Außenteilkörper. Der Innenteilkörper ist mit dem Außenteilkörper mittels einer Stützstruktur, insbesondere einer Stützrippe, verbunden.

Der radial innenliegende Bereich kann sich ausgehend von der Antriebsachse in einem Bereich von 0 % bis zu etwa 50 %, insbesondere bis zu etwa 60 %, einer maximalen Erstreckung der Lagereinheit erstrecken. Der radial außenliegende Bereich kann sich ausgehend von der Antriebsachse in einem Bereich von etwa 50 %, insbesondere von etwa 60 %, vorzugsweise von etwa 70 %, bevorzugt von etwa 80 %, bis zu 100 % einer maximalen Erstreckung der Lagereinheit erstrecken.

Weiterhin kann es zweckmäßig sein, dass die Lagereinheit ein Zentrierelement aufweist. Insbesondere ragt das Zentrierelement in das erste Gehäuseteil hinein. Das Zentrierelement kann hohlzylindrisch ausgebildet sein. Das Zentrierelement kann eine radiale Erstreckung der Lagereinheit begrenzen. Das Zentrierelement kann in einem radial innenliegenden Bereich der Lagereinheit angeordnet ist.

Das Zentrierelement kann eine, insbesondere zumindest im Wesentlichen zylindrische, Lagerausnehmung aufweisen. Die Lagerausnehmung kann dazu vorgesehen sein, eine Antriebswelle der Antriebseinheit aufzunehmen. Die Lagerausnehmung kann dazu vorgesehen sein, die Antriebswelle zu umgeben und zu lagern.

Das erste Gehäuseteil kann dazu vorgesehen sein, die Lagereinheit, insbesondere in radialer Richtung der Antriebsachse, zu zentrieren. Das erste Gehäuseteil kann eine Zentrierausnehmung aufweisen, welche dazu vorgesehen ist, die Lagereinheit, insbesondere das Zentrierelement der Lagereinheit, zu zentrieren. Die Zentrierausnehmung kann dazu vorgesehen sein, das Zentrierelement aufzunehmen. Das Zentrierelement kann eine, insbesondere in Umfangsrichtung des Zentrierelements umlaufende, Zentrierfase auf, welche dazu vorgesehen ist, das Zentrierelement in die Zentrierausnehmung des ersten Gehäuseteils zu führen. Dadurch ist eine besonders genaue und einfache Zentrierung der Lagereinheit in dem Maschinengehäuse, insbesondere in dem ersten Gehäuseteil, möglich, wodurch eine besonders genaue Positionierung und Fluchtung der Getriebeeinheit ermöglicht wird. Dadurch kann übermäßiger Verschleiß oder gar ein Ausfall der Getriebeeinheit vermieden werden.

Des Weiteren kann es zweckmäßig sein, dass die Lagereinheit, insbesondere das Lagergehäuse, ein erstes Anschlagselement aufweist. Insbesondere ist das erste Anschlagselement dazu vorgesehen, einen axialen Anschlag, insbesondere mit dem ersten Gehäuseteil, zu bilden. Vorzugsweise ist das erste Anschlagselement als eine Anschlagschulter ausgebildet. Bevorzugt ist das erste Anschlagselement in einem radial innenliegenden Bereich der Lagereinheit angeordnet. Das Anschlagselement kann eine, insbesondere kreisringförmige, Anschlagsfläche aufweisen. Das erste Anschlagselement ist dazu vorgesehen, einen Anschlag mit dem, insbesondere Inneren des, ersten Gehäuseteils zu bilden. Das erste Anschlagselement ist dazu vorgesehen, einen Abstand der Lagereinheit und somit der Antriebseinheit gegenüber der Getriebeeinheit festzulegen. Dadurch kann die Lagereinheit auf besonders einfache und zuverlässige Weise exakt positioniert werden.

Das erste Anschlagselement kann in radialer Richtung an das Zentrierelement anschließen und/oder das Zentrierelement begrenzen.

Es wird vorgeschlagen, dass die Lagereinheit und/oder die Antriebseinheit, fliegend gelagert ist. Insbesondere sind die Lagereinheit und/oder die Antriebseinheit, in einer gegenüber dem ersten Gehäuseteil abgewandten Seite fliegend gelagert. Vorzugsweise sind die Antriebseinheit und/oder die Lagereinheit derart an dem Maschinengehäuse gelagert, dass die Antriebseinheit ein festes Ende und ein von dem festen Ende abgewandtes fliegendes bzw. freies Ende aufweist. Bevorzugt weisen die Lagereinheit und/oder die Antriebseinheit an einer von dem ersten Getriebeteil abgewandten Seite keine Stützstruktur auf, welche die Antriebseinheit gegenüber dem Maschinengehäuse, insbesondere dem zweiten Gehäuseteil, abstützt. Insbesondere ragen die Lagereinheit und die Antriebseinheit an einer von dem ersten Gehäuseteil abgewandten Seite in das zweite Gehäuseteil hinein. Insbesondere sind dabei die Lagereinheit, insbesondere das weitere Lagergehäuse der Lagereinheit, und die Antriebseinheit in radialer Richtung der Antriebsachse beabstandet zu dem Maschinengehäuse, insbesondere dem zweiten Gehäuseteil, ausgebildet. Hierdurch kann eine verbesserte Umlüftung der Lagereinheit bzw. der Antriebseinheit ermöglicht werden.

Unter einer fliegenden Lagerung soll insbesondere verstanden werden, dass eine Krafteinwirkung außerhalb bzw. nicht zwischen dem/den Lagerungselement/en, erfolgt. Beispielsweise kann die Lagereinheit derart gelagert sein, dass die Lagereinheit zumindest abschnittsweise von einem Lagerungselement bzw. dem Maschinengehäuse absteht. Insbesondere kann die Lagereinheit, insbesondere mittels der Antriebseinheit, an einer zu dem ersten Gehäuseteil weisenden Seite gelagert sein und an dem von dem ersten Gehäuseteil abgewandten Seite frei vorstehen bzw. keine weitere Lagerung oder Stützstruktur aufweisen.

Die Lagereinheit kann dazu vorgesehen sein, die Antriebseinheit, insbesondere eine Antriebswelle der Antriebseinheit, zu lagern, insbesondere mittels einer Fest-Los-Lagerung zu lagern. Es versteht sich, dass auch andere einem Fachmann als sinnvoll erscheinende Lagerungen in Betracht kommen, wie beispielsweise eine schwimmende Lagerung oder angestellte bzw. verspannte Lagerung. Die Lagereinheit kann dazu vorgesehen sein, die Antriebseinheit als ein geschlossenes System aufzunehmen, sodass die Lagereinheit ohne einer weiteren Lagerung bzw. einem weiteren Lagerungselement beispielsweise der Antriebswelle in dem Maschinengehäuse aufgenommen werden kann.

Es kann zweckmäßig sein, dass die Lagereinheit ein weiteres bzw. zweites Lagergehäuse aufweist, welches gegenüber dem Maschinengehäuse, insbesondere dem zweiten Gehäuseteil, in radialer Richtung, insbesondere vollständig, beabstandet ist. Insbesondere ist das weitere Lagergehäuse gegenüber dem Maschinengehäuse beabstandet bzw. frei schwebend angeordnet. Das weitere Lagergehäuse ist von dem Maschinengehäuse, insbesondere dem zweiten Gehäuseteil, umgeben. Das weitere Lagergehäuse kann dazu vorgesehen sein, die Antriebseinheit gegenüber dem Maschinengehäuse zu beabstanden. Das weitere Lagergehäuse ist in axialer Richtung gegenüber dem Lagergehäuse beabstandet. Insbesondere ist das weitere Lagergehäuse an einer von dem ersten Gehäuseteil abgewandten Seite angeordnet. Das Lagergehäuse und das weitere Lagergehäuse können mittels einer Schraubverbindung miteinander verbunden sein.

Es kann zweckmäßig sein, dass die Lagereinheit ein erstes Lagerungselement, insbesondere ein Wälzlagerungselement, aufweist, welches dazu vorgesehen ist, eine/die Antriebswelle der Antriebseinheit zu lagern. Es versteht sich, dass auch andere einem Fachmann als sinnvoll erscheinende Lagerungselemente wie beispielsweise Gleitlagerungselemente verwendet werden können. Insbesondere ist das erste Lagerungselement zwischen einer Getriebeeinheit und der Antriebseinheit, insbesondere dem Antriebsstator, angeordnet und dazu vorgesehen, die Antriebswelle zu lagern. Insbesondere schneidet eine Radialebene der Antriebsachse, welche entlang des ersten Lagerungselements verläuft, das erste Gehäuseteil und die Lagereinheit, insbesondere das Lagergehäuse der Lagereinheit. Hierdurch kann die Antriebseinheit besonders kompakt gelagert sein.

Ferner kann es zweckmäßig sein, dass das erste Lagerungselement, insbesondere in axialer Richtung, durch ein Lagergehäuse der Lagereinheit von dem ersten Gehäuseteil, insbesondere dem Getriebegehäuse, getrennt bzw. beabstandet ist. Insbesondere ist das erste Lagerungselement beabstandet zum ersten Gehäuseteil angeordnet. Vorzugsweise ist das erste Lagerungselement in der Lagerausnehmung des ersten Gehäuseteils angeordnet. Bevorzugt ist das erste Lagerungselement von dem ersten Getriebegehäuse, insbesondere vollständig, umgeben. Weiter bevorzugt ist das erste Lagerungselement von dem Lagerungsgehäuse umgeben und das Lagerungsgehäuse von dem ersten Gehäuseteil umgeben. Hierdurch kann eine Kompatibilität der Lagereinheit mit anderen Handwerkzeugmaschinen, insbesondere Getriebeeinheiten bereitgestellt werden. Vorzugsweise ist das erste Lagerungselement in der Zentrierausnehmung des ersten Gehäuseteils angeordnet und/oder von diesem umgeben. Dadurch kann die Lagereinheit als Bauteil in verschiedenen Bauteilreihen verwendet werden. Weiterhin kann mittels der Lagereinheit besonders einfach eine Positionierung der Lagereinheit in dem Maschinengehäuse ermöglicht werden. In einer alternativen Ausführungsform kann das erste Lagerungselement, insbesondere in axialer Richtung, durch ein Lagergehäuse der Lagereinheit von dem ersten Gehäuseteil, insbesondere dem Getriebegehäuse, teilweise getrennt sein. Dabei kann das Lagerungselement das erste Gehäuseteil zumindest teilweise bzw. abschnittsweise kontaktieren, indem beispielsweise Kontaktpunkte vorhanden sind, an welchen das Lagerungselement bündig mit dem Lagergehäuse ist oder gegenüber dem Lagergehäuse absteht.

Weiterhin kann es zweckmäßig sein, dass das Lagergehäuse der Lagereinheit aus einem Kunststoff gebildet ist. Vorzugsweise ist das Lagergehäuse dazu vorgesehen, das erste Lagerungselement gegenüber der Getriebeeinheit zu positionieren. Das erste Lagerungselement kann von dem Lagergehäuse umspritzt sein. Insbesondere ist das erste Lagerungselement von dem Lagergehäuse umgeben und vorzugsweise formschlüssig und/oder stoffschlüssig mit diesem verbunden. Das erste Lagerungselement kann ein Festlager bilden. Ein Schnitt durch das erste Gehäuseteil entlang einer Radialebene gegenüber der Antriebsachse schneidet das Lagergehäuse und das erste Lagerungselement. Das erste Lagerungselement kann zumindest im Wesentlichen im ersten Gehäuseteil angeordnet sein. Hierdurch kann das erste Gehäuseteil besonders einfach gestaltet sein, indem auf einen Lagersitz für das erste Lagerungselement im ersten Gehäuseteil verzichtet wird und etwaige Sicherungselemente für eine getriebeseitige Lagerung entfallen können. Des Weiteren kann es zweckmäßig sein, dass das erste Lagerungselement gegenüber dem ersten Anschlagselement, insbesondere einer Anschlagsfläche des Anschlagselements, in axialer Richtung weiter in das erste Gehäuseteil hineinragt. Ein Schnitt durch das erste Gehäuseteil entlang einer Radialebene gegenüber der Antriebsachse schneidet das erste Anschlagselement und das erste Lagerungselement. Ein weiterer Schnitt durch das erste Gehäuseteil entlang einer Radialebene gegenüber der Antriebsachse schneidet das erste Lagerungselement, nicht jedoch das erste Anschlagselement. Hierdurch kann die Antriebseinheit besonders weit in das erste Gehäuseteil hineinragen.

Es wird vorgeschlagen, dass die Handwerkzeugmaschine eine Lüftereinheit, insbesondere ein Lüfterradelement, aufweist, welche/welches zwischen dem ersten Lagerungselement und der Antriebseinheit, insbesondere dem Antriebsstator, angeordnet ist. Die Lüftereinheit weist ein Lüfterradelement auf, welches dazu vorgesehen ist, einen Luftstrom zu bilden. Die Lagereinheit, insbesondere das Lagergehäuse, kann das Lagerungselement und die Lüftereinheit umgeben. Vorzugsweise ist die Lüftereinheit von der Lagereinheit, insbesondere vollständig, umgeben.

Es wird ferner vorgeschlagen, dass die Lagereinheit ein Formschlusselement aufweist, welches dazu vorgesehen ist, die Lagereinheit gegenüber dem ersten Gehäuseteil und/oder dem zweiten Gehäuseteil zu halten. Das Formschlusselement kann dazu vorgesehen sein, eine Bewegung der Lagereinheit gegenüber dem zweiten Gehäuseteil in Umfangsrichtung um die Antriebsachse zu sichern. Das Formschlusselement kann dazu vorgesehen sein, eine Drehsicherung zu bilden. Das Formschlusselement kann als eine radiale Erhöhung ausgebildet sein, welche in radialer Richtung absteht. Das Formschlusselement kann eine radiale Erstreckung der Lagereinheit, insbesondere des Lagergehäuses, begrenzen. Vorzugsweise sind vier Formschlusselemente vorgesehen. Die Formschlusselemente können in Umfangsrichtung zumindest um 40° zueinander beabstandet sein.

Es wird weiter vorgeschlagen, dass die Lagereinheit, insbesondere das Lagergehäuse, ein zweites Anschlagselement aufweist. Insbesondere ist das zweite Anschlagselement dazu vorgesehen, einen axialen Anschlag, insbesondere mit dem zweiten Gehäuseteil, zu bilden. Vorzugsweise ist das zweite Anschlagselement als eine Anschlagschulter ausgebildet. Bevorzugt ist das zweite Anschlagselement in einem radial außenliegenden Bereich, insbesondere der Lagereinheit, angeordnet. Bevorzugt ist das zweite Anschlagselement als eine Anschlagschulter ausgebildet. Das zweite Anschlagselement kann eine Anschlagsfläche aufweisen, welche insbesondere quer, vorzugsweise senkrecht, zu einer axialen Richtung verläuft. Das zweite Anschlagselement ist dazu vorgesehen, einen Anschlag mit dem Inneren des zweiten Gehäuseteils zu bilden. Insbesondere ist das zweite Anschlagselement dazu vorgesehen, die Lagereinheit in axialer Richtung anzustellen, insbesondere zu verspannen. Insbesondere ist die zweite Anschlagsfläche von der ersten Anschlagsfläche abgewandt. Dadurch kann die Lagereinheit auf besonders einfache und zuverlässige Weise exakt positioniert werden.

Es wird weiter vorgeschlagen, dass das Formschlusselement und das zweite Anschlagselement einstückig ausgebildet sind. Das Formschlusselement ist mittels einer Schraubverbindung an dem zweiten Gehäuseteil gehalten, insbesondere vorgespannt. Das erste Gehäuseteil und das zweite Gehäuseteil werden mittels einer Schraubverbindung in axialer Richtung verbunden, insbesondere vorgespannt. Insbesondere ist die Lagereinheit, insbesondere das Lagergehäuse, durch die Schraubverbindung zwischen dem ersten Gehäuseteil und dem zweiten Gehäuseteil in axialer Richtung vorgespannt. Hierdurch kann die Antriebseinheit in axialer Richtung fixiert werden, wodurch die Verwendung von insbesondere mehreren Schraubverbindungen eine Verkippung verhindert werden kann und hohe Kräfte abgefangen werden können.

Es kann zweckmäßig sein, dass die Antriebseinheit und/oder die Lagereinheit, insbesondere an einer von dem ersten Gehäuseteil abgewandten Seite, einen Umfangsbereich aufweist, welcher von einem Luftstrom umströmbar ist. Insbesondere ist die Antriebseinheit und/oder die Lagereinheit derart in dem Maschinengehäuse angeordnet bzw. gelagert, dass die Antriebseinheit und/oder die Lagereinheit in einem von dem ersten Gehäuseteil abgewandten Bereich in Umfangsrichtung zumindest im Wesentlichen, insbesondere vollständig, beabstandet zum Maschinengehäuse, insbesondere dem zweiten Gehäuseteil, angeordnet ist. Der Umfangsbereich kann an einer von dem ersten Gehäuseteil abgewandten Seite der Antriebseinheit gebildet bzw. angeordnet sein.

Es wird ferner vorgeschlagen, dass die Handwerkzeugmaschine eine Lufteinleitöffnung aufweist, welche dazu vorgesehen ist, einen Luftstrom derart zu leiten, dass ein Umfangsbereich der Antriebseinheit und/oder der Lagereinheit, insbesondere in axialer Richtung, umströmt wird.

Die Lufteinleitöffnung ist vorzugsweise dazu vorgesehen, den Luftstrom von dem Umfangsbereich der Antriebseinheit in die Lagereinheit zu leiten.

Insbesondere bildet der Umfangsbereich der Antriebsache und das Maschinengehäuse einen Luftströmungsraum, welcher dazu vorgesehen ist, einen Luftstrom entlang der Antriebseinheit zu führen. Vorzugsweise weist der Luftstromraum einen im Wesentlichen kreisringförmigen Querschnitt auf, welche um die Antriebseinheit herum verläuft. Der Luftströmungsraum kann dazu vorgesehen sein, den Luftstrom aufzunehmen. Hierdurch kann eine durch die Handwerkzeugmaschine strömende Kühlluftmenge vergrößert werden.

Ferner kann es zweckmäßig sein, dass die Lagereinheit, insbesondere das Lagergehäuse, die Antriebseinheit in Umfangsrichtung, insbesondere im Wesentlichen vollständig, umgibt und form- und/oder kraftschlüssig mit der Antriebseinheit verbunden ist.

Bevorzugt ist der Luftstrom dazu vorgesehen, die Antriebseinheit, insbesondere einen Antriebsstator, in axialer Richtung, insbesondere vollständig zu umströmen.

Insbesondere ist die Antriebseinheit derart in dem Maschinengehäuse angeordnet, dass ein Luftstrom eine Umfangsfläche bzw. eine Mantelfläche der Lagereinheit und/oder der Antriebseinheit umgibt bzw. umströmt.

Vorzugsweise ist die Lufteinleitöffnung dazu vorgesehen, den Luftstrom am Umfangsbereich entlang der Antriebseinheit zu leiten. Hierdurch kann sichergestellt werden, dass eine Luftstrommenge, welche dazu vorgesehen ist, durch die Handwerkzeugmaschine zu strömen, erhöht. Weiterhin wird eine verbesserte Luftführung und dadurch eine verbesserte Kühlung zumindest der Antriebseinheit ermöglicht.

Es kann zweckmäßig sein, dass die Lufteinleitöffnung, dazu vorgesehen ist, einen Luftstrom in radialer Richtung aus einem Umfangsbereich der Antriebseinheit anzusaugen. Insbesondere wird der Luftstrom zu der Antriebswelle hin gerichtet geleitet. Unter "ansaugen" soll insbesondere verstanden werden, dass ein Luftstrom durch einen Unterdruck erzeugt wird.

Es kann zweckmäßig sein, dass die Antriebseinheit derart an dem Maschinengehäuse gelagert ist, dass ein Umfangsbereich der Antriebseinheit von einem Luftstrom, insbesondere in axialer Richtung, im Wesentlichen umströmbar ist. Die Antriebseinheit ist mittels einer Lagereinheit derart an dem Maschinengehäuse gelagert, dass die Antriebseinheit in einem von dem ersten Gehäuseteil, insbesondere der Getriebeeinheit, abgewandten Seite frei vorstehend ist bzw. keine Stützstruktur aufweist. Hierdurch kann ein Luftstrom besonders einfach und zuverlässig erzeugt werden, indem der Luftstrom ungehindert um die Antriebseinheit strömen kann.

Es kann zweckmäßig sein, dass die Lufteinleitöffnung von der Lagereinheit gebildet ist und sich insbesondere in Umfangsrichtung entlang der Lagereinheit erstreckt. Die Lufteinleitöffnung ist dazu vorgesehen, den Luftstrom in radialer Richtung zu leiten.

Ferner kann es zweckmäßig sein, dass die Luftleitöffnung an einem Umfangsbereich der Lagereinheit angeordnet ist und sich in Umfangsrichtung entlang der Lagereinheit erstreckt. Insbesondere ist die Lufteinleitöffnung dazu vorgesehen, den Luftstrom von einem Umfangsbereich der Lagereinheit, insbesondere dem Lagergehäuse, in radialer Richtung zur Antriebsachse hin zu leiten. Die Lufteinleitöffnung kann dazu vorgesehen sein, den Luftstrom durch die Lagereinheit, insbesondere das Lagergehäuse, hindurch zu leiten.

Weiterhin kann es zweckmäßig sein, dass die Handwerkzeugmaschine eine Getriebeeinheit aufweist, wobei die Lufteinleitöffnung in axialer Richtung zwischen der Getriebeeinheit und der Antriebseinheit, insbesondere einem Antriebsstator, angeordnet ist. Hierdurch kann der Luftstrom in axialer Richtung entlang der gesamten Länge der Antriebseinheit geleitet werden, um eine Antriebseinheit zu kühlen.

Es wird vorgeschlagen, dass die Handwerkzeugmaschine eine Luftleitscheibe, insbesondere mit einer Luftleitausnehmung, aufweist, welche dazu vorgesehen ist, den Luftstrom in axialer Richtung durch die Luftleitscheibe zu leiten. Die Luftleitscheibe ist als eine kreisringförmig Scheibe ausgebildet sein. Die Luftleitausnehmung kann in einem zentralen Bereich angeordnet sein. Des Weiteren kann es zweckmäßig sein, dass die Lufteinleitöffnung in axialer Richtung von einer/der Luftleitscheibe begrenzt ist. Insbesondere schließt die Luftleitscheibe in radialer Richtung an die Lagereinheit, insbesondere das Lagergehäuse, an. Vorzugsweise begrenzt die Luftleitscheibe die Luftleitöffnung in axialer Richtung. Bevorzugt ist die Luftleitscheibe in einem von dem Umfangsbereich der Lagereinheit abgewandten radial außenliegenden Bereich der Lagereinheit angeordnet. Weiter bevorzugt ist die Luftleitscheibe dazu vorgesehen, den Luftstrom in radialer Richtung zur Antriebsachse und in axialer Richtung entlang der Antriebsachse und an der Luftleitscheibe vorbei zu leiten.

Insbesondere ist die Luftleitscheibe zwischen dem Antriebsstator und der Lüftereinheit, insbesondere dem Lüfterradelement, angeordnet. Das Lüfterradelement ist vorzugsweise als ein Radiallüfter ausgebildet. Bevorzugt schließt die Luftleitscheibe in radialer Richtung an die Lagereinheit an. Weiter bevorzugt schließt die Luftleitscheibe in radialer Richtung an die Luftleitöffnung an. Ferner bevorzugt ist die Luftleitscheibe gegenüber der Antriebswelle, insbesondere in radialer Richtung, beabstandet, insbesondere derart beabstandet, dass der Luftstrom entlang der Antriebswelle durch die Luftleitscheibe geführt wird. Die Luftleitausnehmung nimmt insbesondere die Antriebswelle auf und bildet zwischen der Antriebswelle und der Luftleitausnehmung einen Luftdurchtritt für den Luftstrom. Insbesondere ist die Luftleitausnehmung dazu vorgesehen, den Luftstrom zwischen der Luftleitscheibe und der Antriebswelle in axialer Richtung zu leiten. Vorzugsweise ist die Luftleitscheibe dazu vorgesehen, einen Lüftungsquerschnitt zu reduzieren, um einen Unterdruck bzw. eine Strömungsgeschwindigkeit zu erhöhen. Dadurch kann auf besonders einfach Weise eine Strömungsgeschwindigkeit des Luftstroms erhöht werden.

Es wird ferner vorgeschlagen, dass die Lagereinheit die Antriebseinheit, insbesondere einen Stator der Antriebseinheit, vorzugsweise vollständig, umgibt. Insbesondere überdeckt bzw. überlappt die Lagereinheit die Antriebseinheit. Die Lagereinheit, insbesondere das Lagergehäuse, ist form- und/oder kraftschlüssig mit der Antriebseinheit, insbesondere dem Antriebsstator, verbunden.

Es wird weiter vorgeschlagen, dass die Antriebseinheit, insbesondere der Stator der Antriebseinheit, an einem Umfangsbereich bzw. an einer Mantelfläche einen Bereich aufweist, welcher nicht von der Lagereinheit, insbesondere dem Lagergehäuse, umgeben ist.

Die Lagereinheit kann ein weiteres bzw. zweites Lagergehäuse aufweisen. Das Lagergehäuse und das zweite Lagergehäuse können dazu vorgesehen sein, die Antriebseinheit zu lagern. Das Lagergehäuse und das zweite Lagergehäuse können dazu vorgesehen sein, die Antriebseinheit in axialer Richtung zu umgeben. Die Lagergehäuse können als Lagerdeckel bzw. als Lagerschilde ausgebildet sein. Das Lagergehäuse kann ein erstes Ende der Antriebseinheit aufnehmen und das zweite Lagergehäuse kann ein von dem ersten Ende abgewandtes zweites Ende aufnehmen. Die beiden Lagergehäuse umgreifen die Antriebseinheit, insbesondere den Antriebsstator, zumindest teilweise in axialer Richtung. Die beiden Lagergehäuse sind zueinander in axialer Richtung beabstandet. Das Lagergehäuse umgibt die Antriebseinheit in Umfangsrichtung an dem ersten Ende der Antriebseinheit. Das zweite Lagergehäuse umgibt die Antriebseinheit in Umfangsrichtung an dem ersten Ende der Antriebseinheit. Zwischen dem ersten und dem zweiten Lagergehäuse kann der Bereich ausgebildet sein, welcher insbesondere nicht von den beiden Lagergehäusen umgeben ist. Hierdurch kann eine verbesserte Kühlung der Antriebseinheit in einem Umfangsbereich der Antriebseinheit ermöglicht werden. Insbesondere bildet das Lagergehäuse ein erstes Lagergehäuse der Lagereinheit.

Es kann zweckmäßig sein, dass die Lagereinheit, insbesondere das Lagergehäuse, eine Luftausleitöffnung aufweist, welche dazu vorgesehen ist, den Luftstrom und/oder den weiteren Luftstrom aus der Lagereinheit heraus zu leiten. Insbesondere ist die Luftausleitöffnung in einem radialen Abschnitt der Lagereinheit angeordnet. Vorzugsweise ist die Luftausleitöffnung, insbesondere in Umfangsrichtung, durch eine Stützstruktur, insbesondere eine Stützrippe, begrenzt, welche einen radial innenliegenden Bereich der Lagereinheit, insbesondere Innenteilkörper, von einem radial außenliegenden Bereich der Lagereinheit, insbesondere Außenteilkörper, stützen. Die Luftausleitöffnung ist in radialer Richtung durch den Innenteilkörper und den Außenteilkörper begrenzt. Die Luftausleitöffnung ist in einer Umfangsrichtung um die Antriebsachse durch die Stützstruktur, insbesondere die Stützrippe begrenzt. Die Stützstruktur, insbesondere die Stützrippe, ist derart ausgestaltet, dass ein möglichst optimales Ausströmen des Luftstroms aus der Lagereinheit ermöglicht wird.

Ferner bevorzugt ist die Luftleitscheibe dazu vorgesehen, einen weiteren bzw. zweiten Luftstrom in den Luftstrom zu leiten und diese beiden Luftströme zu verbinden. Die Lufteinleitöffnung ist dazu vorgesehen, einen in die Handwerkzeugmaschine eintretenden Luftstrom in einen ersten Luftstrom und einen zweiten Luftstrom aufzuteilen. Der erste Luftstrom ist dazu vorgesehen, die Antriebseinheit zu umgeben bzw. zu umströmen. Der zweite Luftstrom ist dazu vorgesehen die Antriebseinheit zu durchströmen. Der erste Luftstrom kann an dem Umfangsbereich der Antriebseinheit und/oder Lagereinheit ausgebildet sein. Der zweite Luftstrom kann zwischen der Antriebswelle und dem Antriebsstator ausgebildet sein. Dadurch wird die Antriebseinheit sowohl innen als auch außen durchströmt bzw. umströmt. Zudem kann durch einen aufgeteilten Luftstrom sichergestellt werden, dass ein Teil des mit Schmutzpartikel und Metallstaub behafteten Luftstroms nicht durch den Motor geführt wird.

Insbesondere weist die Handwerkzeugmaschine eine zwischen dem Maschinengehäuse, insbesondere dem ersten Gehäuseteil, und der Lagerungseinheit, insbesondere dem Lagerungsgehäuse, eine Begrenzungswand auf, welche dazu vorgesehen ist, den Umfangsbereich, insbesondere in axialer Richtung, zu begrenzen. Insbesondere ist die Begrenzungswand dazu vorgesehen, den Umfangsbereich, insbesondere den Strömungsraum, in axialer Richtung gegenüber einem Luftdurchtritt, insbesondere mittels dem ersten Luftstrom, abzudichten. Die Begrenzungswand kann als eine, insbesondere in radialer Richtung nach innen abstehende, Gehäuseschulter ausgebildet sein. Die Begrenzungswand schließt vorzugsweise direkt an die Lagereinheit an.

Die Erfindung bezieht sich ferner auf eine Handwerkzeugmaschinevorrichtung, insbesondere eine Antriebseinheitslagerung, für eine Handwerkzeugmaschine mit einer eine Antriebswelle aufweisenden Antriebseinheit und einer Lagereinheit zur Lagerung der Antriebseinheit, wobei die Antriebswelle ein erstes Ende mit einem Aufnahmebereich zur Aufnahme eines Getriebeelements und mit einem Gewindeelement zur Verbindung des Getriebeelements und ein von dem ersten Ende abgewandtes zweites Ende aufweist.

Es kann zweckmäßig sein, dass das zweite Ende einen Drehmomentaufnahmebereich zur Verbindung des Getriebeelements aufweist.

Prinzipiell kann der Drehmomentaufnahmebereich dazu vorgesehen sein, eine Gewindemutter zur Befestigung des Getriebeelements mit der Antriebswelle anzuziehen, indem die Gewindemutter mit einem ersten Drehmoment beaufschlagt wird und der Drehmomentaufnahmebereich mit einer dem ersten Drehmoment entgegengesetzten Drehmoment beaufschlagt werden. Dadurch kann das Getriebeelement besonders einfach mit der Antriebswelle verbunden werden, ohne dass an der Antriebswelle, insbesondere zwischen der Gewindemutter und der Antriebseinheit bzw. dem Antriebsstator, ein Drehmomentaufnahmebereich vorgesehen sein muss. Dadurch kann besonders kompakt gebaut werden, da der Drehmomentaufnahmebereich zum zweiten Ende verschoben wird.

Hierdurch kann die Schraubenmutter in axialer Richtung direkt an das Getriebeelement und das Getriebeelement direkt an das Lagerungselement anschließen.

Insbesondere ist der Drehmomentaufnahmebereich dazu vorgesehen, in einem Montagezustand ein Drehmoment auf die Antriebswelle aufzubringen bzw. einem auf die Antriebswelle aufgebrachtem Drehmoment ein Gegendrehmoment zu bilden. Insbesondere kann das Drehmoment mittels einem Werkzeug, wie beispielsweise einem Maulschlüssel, auf den Drehmomentaufnahmebereich aufgebracht werden.

Vorzugsweise ist das Gewindeelement lösbar verbindbar, insbesondere mittels einer Schraubverbindung lösbar verbindbar.

Es kann zweckmäßig sein, dass die Lagereinheit, insbesondere ein erstes Lagergehäuse, eine Lagerausnehmung aufweist. Die Lagereinheit, insbesondere das erste Lagergehäuse, umgibt die Antriebseinheit, insbesondere die Antriebswelle, an dem ersten Ende.

Ferner kann es zweckmäßig sein, dass die Lagerausnehmung eine radiale Erstreckung aufweist, welche, insbesondere um mindestens 1 %, vorzugsweise mindestens 3 %, bevorzugt mindestens 5 %, besonders bevorzugt mindestens 8 %, kleiner ist, als eine radiale Erstreckung des Gewindeelements. Die Montage des Getriebeelements kann somit erst dann erfolgen, wenn das erste Lagergehäuse mit der Antriebseinheit verbunden ist. Um einem Drehmoment, welches bei einer Schraubverbindung entsteht, entgegenwirken zu können, ist der abstehende Drehmomentaufnahmebereich am zweiten Ende der Antriebswelle vorgesehen. Hierdurch kann eine besonders kompakte und insbesondere vormontierbare Antriebseinheit und Lagereinheit bereitgestellt werden.

Weiterhin kann es zweckmäßig sein, dass die Lagerausnehmung eine erste Lageraufnahme umgibt, welche dazu vorgesehen ist, ein erstes Lagerungselement zu einer Lagerung der Antriebswelle aufzunehmen. Das erste Lagerungselement ist kraft- und/oder formschlüssig mit der Lagereinheit, insbesondere dem ersten Lagergehäuse, verbunden. Das erste Lagerungselement ist von der Lagereinheit, insbesondere dem ersten Lagergehäuse, umgeben. Die erste Lageraufnahme ist vorzugsweise dazu vorgesehen, eine Festlagerung zu bilden. Das erste Lagerungselement ist dazu vorgesehen, durch eine Wellenschulter einerseits und durch das Getriebeelement andererseits in axialer Richtung angestellt bzw. vorgespannt zu werden.

Des Weiteren kann es zweckmäßig sein, dass der Drehmomentübertragungsbereich, insbesondere an dem zweiten Ende, insbesondere in axialer Richtung gegenüber der Lagereinheit, insbesondere einem zweiten Lagergehäuse, absteht.

Es wird vorgeschlagen, dass der Drehmomentaufnahmebereich ein Mitnahmeprofil aufweist, welches dazu vorgesehen ist, einen Formschluss für eine Drehmomentaufnahme zu bilden. Das Formschlusselement kann dazu vorgesehen sein, ein Gegenmoment an der zweiten Seite der Antriebswelle aufzubringen, um das Gewindeelement mit der Antriebswelle an der ersten Seite zu verbinden. Das Mitnahmeprofil, insbesondere ein Querschnitt des Mitnahmeprofils, kann als ein Innenprofil oder als ein Außenprofil ausgebildet sein. Das Mitnahmeprofil kann als ein Innenzweiflach, einen Innenvierkant oder einen Innensechskant ausgebildet sein. Das Mitnahmeprofil kann als ein Außenzweiflach, einen Außenvierkant oder ein Außensechskant ausgebildet sein.

Es wird weiter vorgeschlagen, dass der Drehmomentaufnahmebereich in axialer Richtung an eine Lageraufnahme zur Aufnahme eines zweiten Lagerungselements der Antriebseinheit anschließt.

Es kann zweckmäßig sein, dass die Lageraufnahme von einer Lagereinheit, insbesondere dem zweiten Lagergehäuse, umgeben ist. Die Lageraufnahme ist vorzugsweise dazu vorgesehen, eine Loslagerung zu bilden.

Ferner kann es zweckmäßig sein, dass das erste Ende der Antriebswelle, insbesondere das Gewindeelement, fliegend gelagert ist.

Weiter kann es zweckmäßig sein, dass das Getriebeelement direkt auf der Antriebswelle sitzt. Vorzugsweise ist keine Zwischenwelle oder Adapterwelle vorhanden, welche das Getriebeelement aufnimmt und mit der Antriebswelle verbindet. Die Getriebeeinheit kann auf der Antriebswelle, insbesondere mittels einer Presspassung, aufgepresst sein. Die Getriebeeinheit kann in Umfangsrichtung formschlüssig mit der Antriebswelle verbunden sein. Hierdurch kann eine besonders kompakte Antriebseinheit bereitgestellt werden.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt.

Hierbei zeigt:
- Fig. 1: eine perspektivische Ansicht einer Handwerkzeugmaschine,
- Fig. 2 bis 3: jeweils ein Schnitt durch die Handwerkzeugmaschine aus Fig. 1,
- Fig. 4 bis 5: jeweils eine Ansicht auf eine Lagereinheit und eine Antriebseinheit der Handwerkzeugmaschine aus Fig. 1,
- Fig. 6 bis 7: jeweils ein Schnitt durch eine Lagereinheit und eine Antriebseinheit der Handwerkzeugmaschine aus Fig. 1 und
- Fig. 9 bis 10: jeweils eine Explosionsansicht der Handwerkzeugmaschine.

In den folgenden Figuren sind gleiche Bauteile mit den gleichen Bezugszeichen versehen.

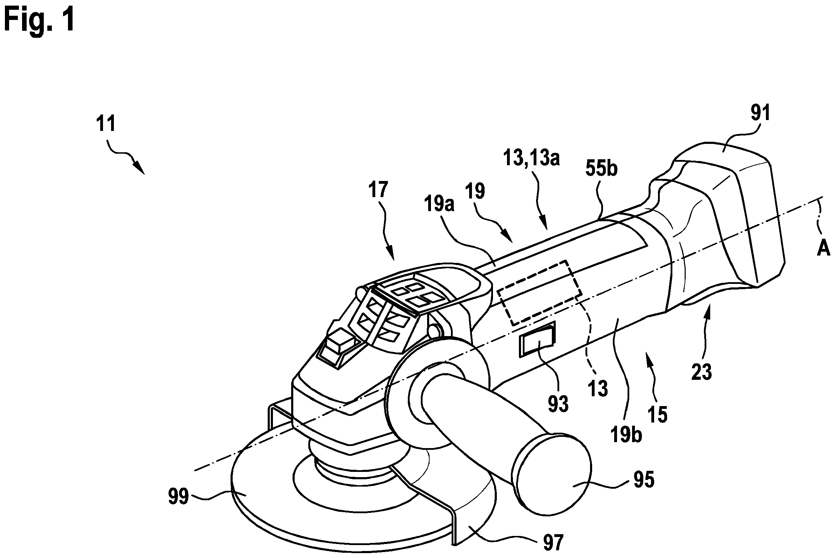

Fig. 1 zeigt eine als einen Winkelschleifer ausgebildete Handwerkzeugmaschine 11 mit einer Antriebseinheit 13, mit einem Maschinengehäuse 15 und mit einer Lagereinheit 25 zur Lagerung der Antriebseinheit 13. Das Maschinengehäuse 15 bildet ein Außengehäuse der Handwerkzeugmaschine 11. Das Maschinengehäuse 15 weist ein als Getriebegehäuse ausgebildetes erstes Gehäuseteil 17 und ein die Antriebseinheit 13 umgebendes zweites Gehäuseteil 19 auf. Das zweite Gehäuseteil 19 umgibt eine Getriebeeinheit 21 und ist aus einem Metall gebildet.

Das zweite Gehäuseteil 19 umgibt die Antriebseinheit 13 und umfasst einen Griffbereich 23 zum Umgreifen der Handwerkzeugmaschine 11. Das zweite Gehäuseteil 19 ist dazu vorgesehen, von einem Bediener umgriffen zu werden. Das zweite Gehäuseteil 19 ist aus zwei Gehäusehalbschalen 19a, 19b gebildet. Das zweite Gehäuseteil 19 weise ein erstes Ende auf, welches an das erste Gehäuseteil 17 anschließt und ein von dem ersten Ende abgewandtes zweites Ende, welches mit einer als ein Akkupack ausgebildeten Akkuvorrichtung 91 verbindbar ist. Das zweite Gehäuseteil 19 umfasst ferner ein als Ein-/AusSchalter ausgebildetes Betätigungselement 93 auf, welches dazu vorgesehen ist die Antriebseinheit ein-/aus-zuschalten. Ferner weist die Handwerkzeugmaschine 11 einen Zusatzhandgriff 95 und eine Schutzhaube 97 und ein von der Schutzhaube 97 zumindest teilweise umgebenes, als eine Schleifscheibe ausgebildetes Zubehörwerkzeug 99 auf.

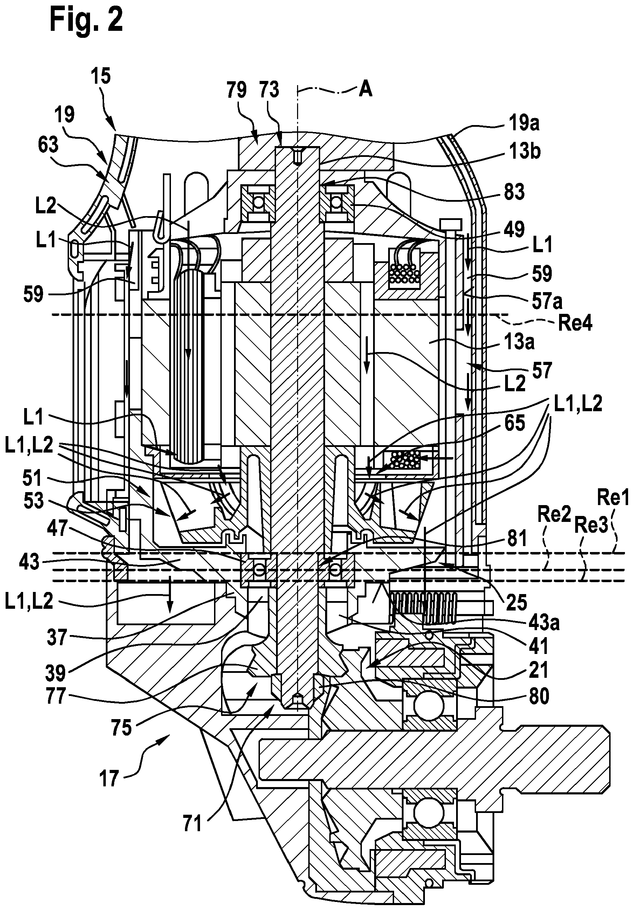

Die Handwerkzeugmaschine 11 weist eine Lagereinheit 25 mit einem Lagergehäuse 27 auf, welches im Wesentlichen im zweiten Gehäuseteil 19 angeordnet ist und dazu vorgesehen ist, in das erste Gehäuseteil 17 hineinzuragen. Das Lagergehäuse 27 ist in einem montierten Zustand der Handwerkzeugmaschine 11 teilweise in dem ersten Gehäuseteil 17 angeordnet ist. Dabei schneidet eine Radialebene Re1 der Antriebsachse A, welche entlang der Schnittstelle des ersten und des zweiten Gehäuseteils 19 verläuft, das Lagergehäuse 27 (Fig. 2). Das Lagergehäuse 27 ragt mindestens 10 mm in das erste Gehäuseteil 17 hinein.

Das Lagergehäuse 27 ist als ein Lagerdeckel bzw. als ein Lagerschild ausgebildet. Das Lagergehäuse 27 kann dazu vorgesehen sein, die Antriebseinheit 13, insbesondere in axialer und radialer Richtung der Antriebsachse A, gegenüber dem ersten und dem zweiten Gehäuseteil 19 zu lagern. Das Lagergehäuse 27 ist dazu vorgesehen, die Antriebseinheit 13 gegenüber der Getriebeeinheit 21 auszurichten bzw. zu positionieren. Das Lagergehäuse 27 ist formschlüssig mit dem Antriebsstator 13a verbunden.

Die Antriebseinheit 13 weist eine Antriebswelle 13b auf, welche dazu vorgesehen ist, sich entlang einer Antriebsachse A zu erstrecken und um die Antriebsachse A zu drehen. Die Antriebswelle 13b kann einen Antriebsrotor 13b bilden. Die Antriebseinheit 13 weist einen Antriebsstator 13a auf, welcher drehfest gegenüber dem zweiten Gehäuseteil 19 gelagert ist. Die Handwerkzeugmaschine 11 erstreckt sich im Wesentlichen entlang der Antriebsachse A.

Das erste Gehäuseteil 17 und das zweite Gehäuseteil 19 überlappen das Lagergehäuse 27 in axialer Richtung entlang der Antriebsachse A. Das Lagergehäuse 27 ist innenliegend, d.h. vollständig von dem Maschinengehäuse 15 umgeben. Das Lagergehäuse 27 ist zwischen dem ersten Gehäuseteil 17 und dem zweiten Gehäuseteil 19 angeordnet und in axialer Richtung entlang der Antriebsachse A gegenüber dem ersten Gehäuseteil 17 und dem zweiten Gehäuseteil 19 vorgespannt. Das Lagergehäuse 27 ist topfförmig ausgebildet und umgibt teilweise den Antriebsstator 13a.

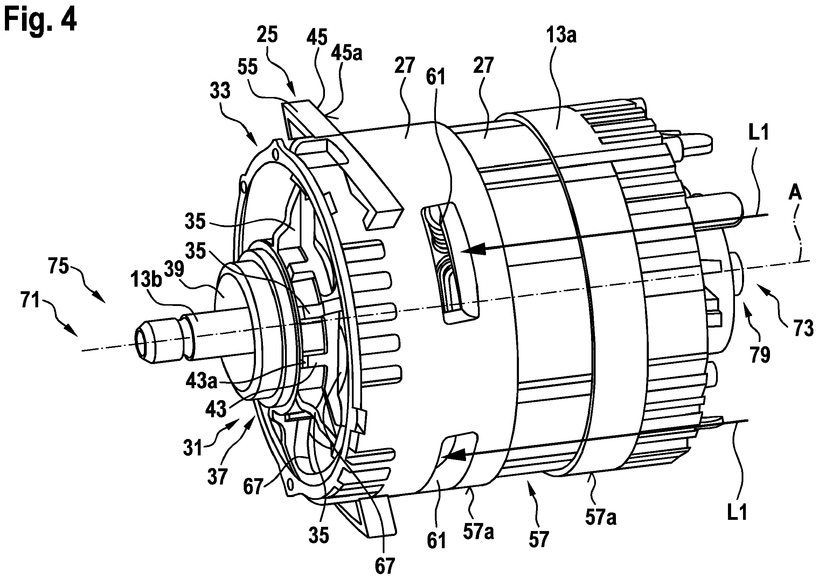

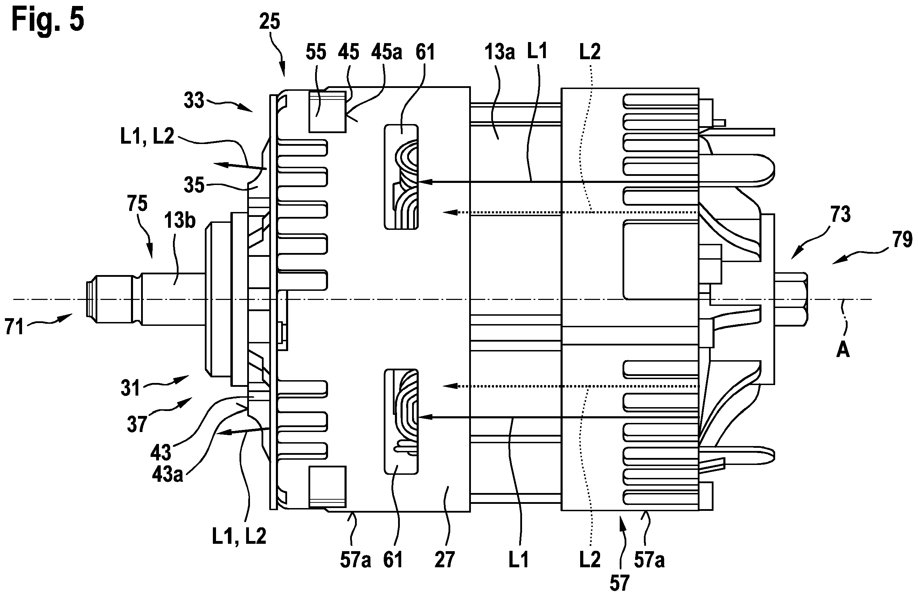

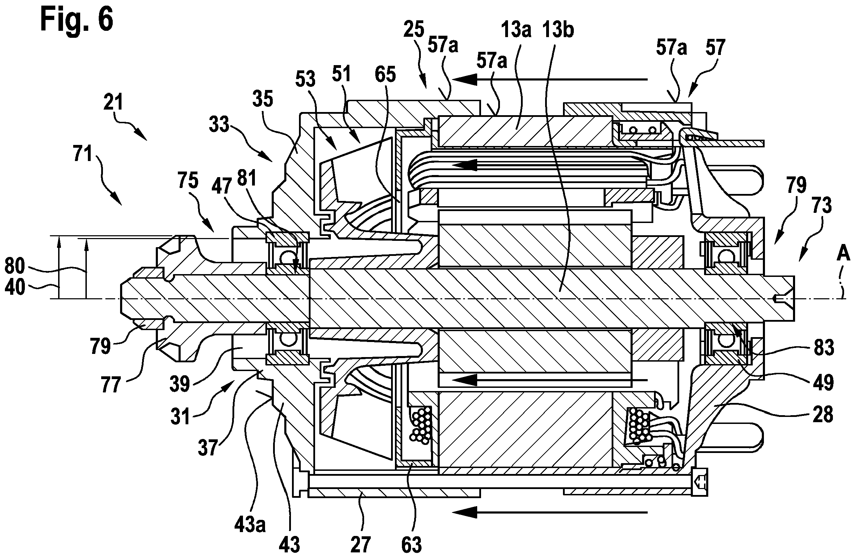

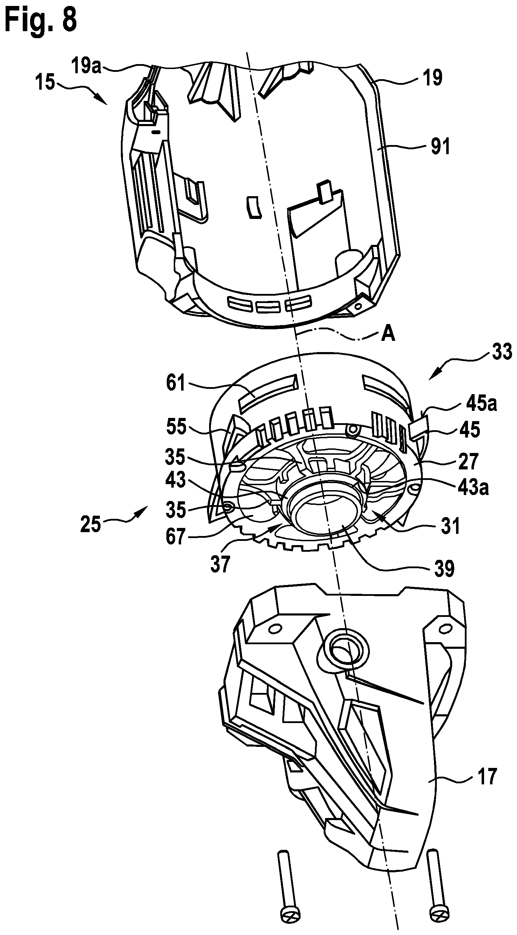

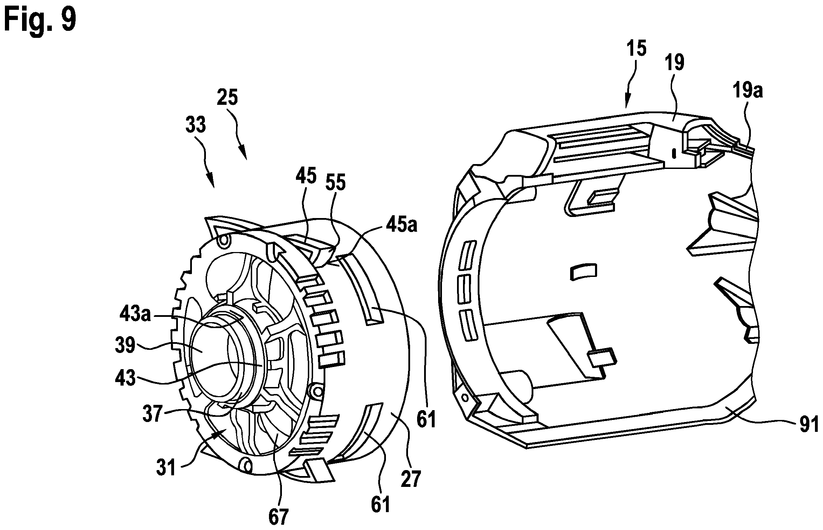

Das Lagergehäuse 27 ist dazu vorgesehen, sich in axialer Richtung in einem radial innenliegenden Bereich 31 an dem ersten Gehäuseteil 17 und in einem radial außenliegenden Bereich 33 an dem zweiten Gehäuseteil 19 abzustützen. Das Lagergehäuse 27 weist einen radial innenliegenden Bereich, 31 welcher einen Innenteilkörper bildet, und einen radial außenliegenden Bereich 33, welcher einen Außenteilkörper bildet, auf (Fig. 4 bis 9). Die Bereiche sind im Wesentlichen hohlzylindrisch ausgebildet. Der Innenteilkörper ist mit dem Außenteilkörper durch mehreren sich in radialer Richtung erstreckende Stützrippen 35 verbunden, welche eine Stützstruktur 35 bilden.

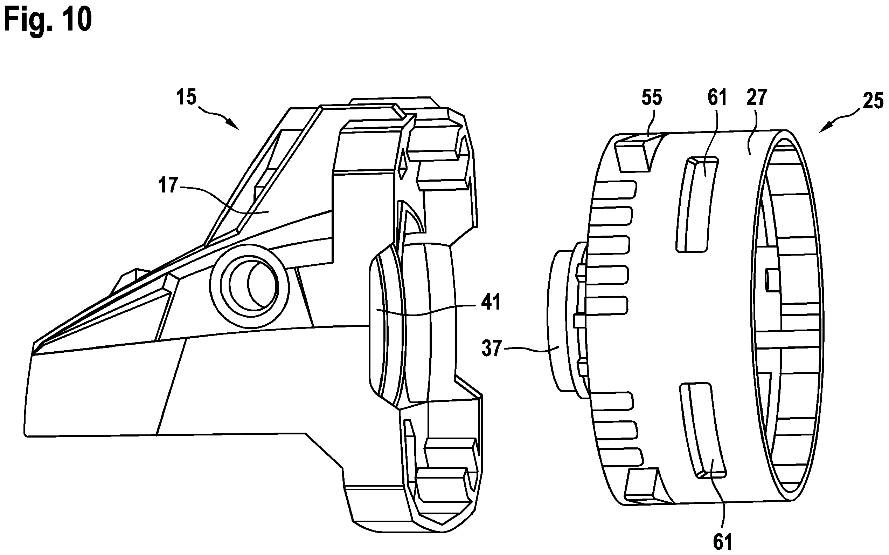

Das Lagergehäuse 27 weist ein Zentrierelement 37 auf, welches durch den Innenteilkörper gebildet ist. Das Zentrierelement 37 ist im Wesentlichen hohlzylindrisch ausgebildet und ragt in das erste Gehäuseteil 17 hinein, um eine Zentrierung des Lagergehäuses 27 mit dem ersten Gehäuseteil 17 zu bilden. Das Zentrierelement 37 weist eine im Wesentlichen zylindrische Lagerausnehmung 39 auf, welche eine radiale Erstreckung des Lagergehäuses 27 begrenzt (Fig. 10). Die Lagerausnehmung 39 ist dazu vorgesehen, eine Antriebswelle 13b der Antriebseinheit 13 aufzunehmen und diese zu umgeben.

Das erste Gehäuseteil 17 ist dazu vorgesehen, das Lagergehäuse 27 in radialer Richtung der Antriebsachse A zu zentrieren. Das erste Gehäuseteil 17 weist eine Zentrierausnehmung 41 auf, welche dazu vorgesehen ist, das Zentrierelement 37 des Lagergehäuses 27 zu zentrieren (Fig. 2). Die Zentrierausnehmung 41 ist dazu vorgesehen, das Zentrierelement 37 aufzunehmen, wobei das Zentrierelement 37 eine in Umfangsrichtung des Zentrierelements 37 umlaufende Zentrierfase aufweist, welche dazu vorgesehen ist, das Zentrierelement 37 in die Zentrierausnehmung 41 des ersten Gehäuseteils 17 zu führen.

Das Lagergehäuse 27 weist ein erstes Anschlagselement 43 auf, welches dazu vorgesehen ist, einen axialen Anschlag mit dem ersten Gehäuseteil 17 zu bilden. Das erste Anschlagselement 43 ist an dem Innenteilkörper angeordnet und als eine Anschlagschulter ausgebildet. Das erste Anschlagselement 43 weist eine kreisringförmige Anschlagsfläche 43a auf. Das erste Anschlagselement 43 ist dazu vorgesehen, einen Anschlag mit dem Inneren des ersten Gehäuseteils 17 zu bilden. Das erste Anschlagselement 43 ist radial innenliegend angeordnet. Das erste Anschlagselement 43 ist dazu vorgesehen, einen Abstand der Lagereinheit 25 und somit der Antriebseinheit 13 gegenüber der Getriebeeinheit 21 festzulegen. Das erste Anschlagselement 43 schließt in radialer Richtung an das Zentrierelement 37 an und begrenzt dieses.

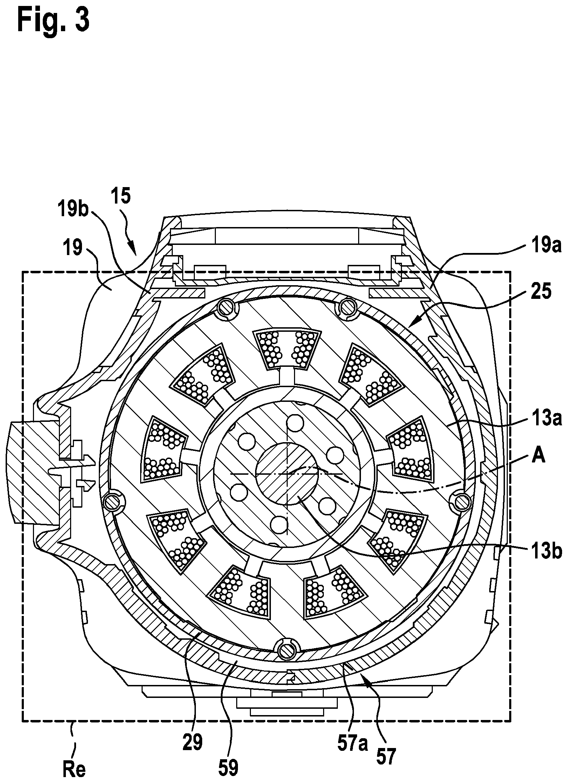

Das Lagergehäuse 27 und die Antriebseinheit 13 sind gegenüber dem Maschinengehäuse 15 bzw. dem zweiten Gehäuseteil 19 fliegend gelagert. Das Lagergehäuse 27 und die Antriebseinheit 13 in einer gegenüber dem ersten Gehäuseteil 17 abgewandten Seite fliegend gelagert. Die Lagereinheit 25 und die Antriebseinheit 13 sind derart an dem Maschinengehäuse 15 gelagert, dass die Antriebseinheit 13 ein festes Ende und ein von dem festen Ende abgewandtes fliegende bzw. freies Ende aufweist. Die Lagereinheit 25 und/oder die Antriebseinheit 13 weisen an einer von dem ersten Gehäuseteil 17 abgewandten Seite keine Stützstruktur 35 auf, welche die Antriebseinheit 13 gegenüber dem zweiten Gehäuseteil 19 abstützt. Die Lagereinheit 25 und die Antriebseinheit 13 ragen an einer von dem ersten Gehäuseteil 17 abgewandten Seite in das zweite Gehäuseteil 19 hinein. Die Lagereinheit 25 und die Antriebseinheit 13 sind an dem freien Ende in radialer Richtung der Antriebsachse A beabstandet zu dem zweiten Gehäuseteil 19 ausgebildet. Dabei schneidet eine Radialebene Re4 der Antriebsachse A, welche durch ein weiteres bzw. zweites Lagergehäuse 19 verläuft, den Antriebsstator der Antriebseinheit 13 und das zweite Gehäuseteil 19 (Fig. 3).

Das Lagergehäuse 27 ist dazu vorgesehen, die Antriebseinheit 13 samt der Antriebswelle 13b mittels einer Fest-Los-Lagerung zu lagern. Die Lagereinheit 25 ist dazu vorgesehen, die Antriebseinheit 13 als ein geschlossenes System aufzunehmen, sodass die Lagereinheit 25 ohne einer weiteren Lagerung mittels einem weiteren Lagerungselement in dem Maschinengehäuse 15 gelagert ist.

Die Lagereinheit 25 weist ein als ein Wälzlagerungselement ausgebildetes erstes Lagerungselement 47 auf, welches dazu vorgesehen ist, die Antriebswelle 13b zu lagern. Das erste Lagerungselement 47 ist zwischen einer Getriebeeinheit 21 und dem Antriebsstator 13a angeordnet und dazu vorgesehen, die Antriebswelle 13b zu lagern. Eine Radialebene Re2 der Antriebsachse A, welche durch das erste Lagerungselement 47 verläuft, schneidet das erste Gehäuseteil 17 und das Lagergehäuse 27 der Lagereinheit 25 (Fig. 2).

Das erste Lagerungselement 47 ist durch das Lagergehäuse 27 von dem ersten Gehäuseteil 17 getrennt und beabstandet zu dem ersten Gehäuseteil 17, 19 angeordnet. Das erste Lagerungselement 47 ist in der Zentrierausnehmung 41 des ersten Gehäuseteils 17 angeordnet und von dem ersten Gehäuseteil 17 teilweise umgeben. Das erste Lagerungselement 47 ist in der Lagerausnehmung 39 des ersten Gehäuseteils 17 angeordnet. Eine Radialebene Re2 der Antriebsachse A, welche durch das erste Lagerungselement 47 verläuft, schneidet das erste Gehäuseteil 17, das Lagergehäuse 27 der Lagereinheit 25 und die Zentrierausnehmung 41 des ersten Gehäuseteils 17 und die Lagerausnehmung 39 des Lagergehäuses 27. Das erste Lagerungselement 47 ist von dem ersten Gehäuseteil 41 vollständig umgeben. Das erste Lagerungselement 47 ist in axialer Richtung von dem Lagergehäuse 27 der Lagereinheit 25 vollständig umgeben und das Lagergehäuse 27 ist in axialer Richtung von dem ersten Gehäuseteil 17 teilweise umgeben. Das Lagergehäuse 27 ist dabei aus einem Kunststoff gebildet. Das Lagergehäuse 27 ist dazu vorgesehen, das erste Lagerungselement 47 gegenüber der Getriebeeinheit 21 zu positionieren. Das erste Lagerungselement 47 ist von dem Lagergehäuse 27 umspritzt und formschlüssig und/oder stoffschlüssig mit dem Lagergehäuse 27 verbunden. Das erste Lagerungselement 47 bildet ein Festlager. Das erste Lagerungselement 47 ist zumindest im Wesentlichen im ersten Gehäuseteil 17 angeordnet.

Das erste Lagerungselement 47 ragt in axialer Richtung gegenüber dem ersten Anschlagselement 43 weiter in das erste Gehäuseteil 17 hinein und steht gegenüber dem Anschlagselemente 43 hervor. Eine Radialebene Re3 der Antriebsachse A, welche entlang dem ersten Anschlag verläuft, schneidet das erste Gehäuseteil 17 und das erste Anschlagselement 43.

Die Handwerkzeugmaschine 11 weist eine Lüftereinheit 51 auf, welche in axialer Richtung zwischen dem ersten Lagerungselement 47 und dem Antriebsstator 13a angeordnet ist. Die Lüftereinheit 51 weist ein Lüfterradelement 53 auf, welches dazu vorgesehen ist, einen Luftstrom L1 zu bilden. Das Lagergehäuse 27 umgibt das Lüfterradelement 53 in axialer Richtung vollständig.

Das Lagergehäuse 27 weist ein als eine Erhebung 55 ausgebildetes Formschlusselement 55 auf, welches dazu vorgesehen ist, die Lagereinheit 25 gegenüber dem zweiten Gehäuseteil 19 zu halten (Fig. 4). Die Erhebung 55 ist dazu vorgesehen, eine Bewegung des Lagergehäuses 27 gegenüber dem zweiten Gehäuseteil 19 in Umfangsrichtung um die Antriebsachse A zu sichern. Die Erhebung 55 ist dazu vorgesehen, eine Drehsicherung des Lagergehäuses 27 zu bilden. Die Erhebung 55 ist als eine radiale Erhöhung ausgebildet, welche in radialer Richtung absteht. Die Erhebung 55 begrenzt eine radiale Erstreckung des Lagergehäuses 27. Vorzugsweise sind vier Erhebungen 55 vorgesehen. Die Erhebungen 55 können in Umfangsrichtung zumindest um 40° voneinander beabstandet sein. Jeweils zwei Erhebungen 55 sind an zueinander abgewandten Seiten des Lagergehäuses 27 angeordnet.

Das Lagergehäuse 27 weist ein zweites Anschlagselement 45 auf. Das zweite Anschlagselement 45 ist dazu vorgesehen, einen axialen Anschlag mit dem zweiten Gehäuseteil 19 zu bilden. Das zweite Anschlagselement 45 ist als eine Anschlagschulter ausgebildet und in einem radial außenliegenden Bereich 33 des Lagergehäuses 27 angeordnet. Das zweite Anschlagselement 45 ist als eine Anschlagschulter ausgebildet. Das zweite Anschlagselement 45 weist eine Anschlagsfläche 45a auf, welche senkrecht zu einer axialen Richtung verläuft. Das zweite Anschlagselement 45 ist dazu vorgesehen, einen Anschlag mit dem Inneren des zweiten Gehäuseteils 19 zu bilden. Das zweite Anschlagselement 45 ist dazu vorgesehen, die Lagereinheit 25 in axialer Richtung zu verspannen. Die zweite Anschlagsfläche 45a ist von der ersten Anschlagsfläche 43a abgewandt. Das Lagergehäuse 17 weist beide Anschlagselement 43, 45 auf.

Die Erhebung 55 und das zweite Anschlagselement 45 sind einstückig ausgebildet. Die Erhebungen 55 sind mittels einer Schraubverbindung in axialer Richtung vorgespannt. Das erste und das zweite Gehäuseteil 19 werden mittels einer Schraubverbindung in axialer Richtung verbunden. Das Lagergehäuse 27 und insbesondere das erste und zweite Anschlagselement 45 sind durch die Schraubverbindung zwischen dem ersten Gehäuseteil 17 und dem zweiten Gehäuseteil 19 in axialer Richtung vorgespannt.

Die Antriebseinheit 13 und die Lagereinheit weisen an einer von dem ersten Gehäuseteil 17 abgewandten Seite einen Umfangsbereich 57 auf, welcher von einem Luftstrom L1 umströmbar ist. Die Antriebseinheit 13 ist derart in dem Maschinengehäuse 15 angeordnet bzw. gelagert, dass die Antriebseinheit 13 in einem von dem ersten Gehäuseteil 17 abgewandten Bereich in Umfangsrichtung zumindest im Wesentlichen beabstandet zu dem zweiten Gehäuseteil 19 angeordnet ist. Der Umfangsbereich 57 ist an einer von dem ersten Gehäuseteil 17 abgewandten Seite der Antriebseinheit 13 angeordnet.

Der Umfangsbereich 57 der Antriebseinheit 13 bzw. der Lagereinheit 27 und das Maschinengehäuse 15 bilden einen Luftströmungsraum 59, welcher dazu vorgesehen ist, einen Luftstrom L1 im Wesentlichen entlang der Antriebseinheit 13 zu führen. Der Luftströmungsraum 59 weist einen im Wesentlichen kreisringförmigen Querschnitt auf, welche um die Antriebseinheit 13 herum verläuft.

Die Lagereinheit 25 umgibt die Antriebseinheit 13 in Umfangsrichtung im Wesentlichen vollständig und ist form- und/oder kraftschlüssig mit der Antriebseinheit 13 verbunden.

Die Lufteinleitöffnung 61 ist dazu vorgesehen, einen Luftstrom L1 derart zu leiten, dass ein Umfangsbereich 57 der Antriebseinheit 13 bzw. des Lagergehäuses 27 in axialer Richtung umströmt wird. Die Lufteinleitöffnung 61 ist dazu vorgesehen, den Luftstrom L1 von dem Umfangsbereich 57 des Lagergehäuses 27 in ein Inneres bzw. in einen Innenbereich des Lagergehäuses 27 zu leiten. Der Luftstrom L1 ist dazu vorgesehen, den Antriebsstator 13a in axialer Richtung, insbesondere vollständig zu umströmen. Die Antriebseinheit 13 ist derart in dem Maschinengehäuse 15 angeordnet, dass der Luftstrom L1 eine Umfangsfläche 57a der Lagereinheit 25 und der Antriebseinheit 13 umgibt bzw. umströmt.

Die Antriebseinheit 13 ist derart an dem Maschinengehäuse 15 gelagert ist, dass ein Umfangsbereich 57 der Antriebseinheit 13 von einem Luftstrom L1 in axialer Richtung, im Wesentlichen umströmbar ist. Die Antriebseinheit 13 ist mittels einer Lagereinheit 25 derart an dem Maschinengehäuse 15 gelagert, dass die Antriebseinheit 13 in einem von der Getriebeeinheit 21 abgewandeten Seite frei vorstehend ist bzw. keine Stützstruktur 35 aufweist.

Die Lufteinleitöffnung 61 ist von dem Lagergehäuse 27 gebildet und erstreckt sich in Umfangsrichtung entlang dem Lagergehäuse 27. Die Lufteinleitöffnung 61 ist dazu vorgesehen, den Luftstrom L1 in radialer Richtung zu leiten. Die Luftleitöffnung ist an einem Umfangsbereich 57 der Lagereinheit 25 und erstreckt sich in Umfangsrichtung entlang der Lagereinheit 25. Die Lufteinleitöffnung 61 ist dazu vorgesehen, den Luftstrom L1 von einem Umfangsbereich 57 des Lagergehäuses 27 in radialer Richtung zur Antriebsachse A hin zu leiten. Die Lufteinleitöffnung 61 ist dazu vorgesehen, den Luftstrom L1 durch das Lagergehäuse 27 hindurch zu leiten.

Die Lufteinleitöffnung 61 ist in axialer Richtung zwischen der Getriebeeinheit 21 und dem Antriebsstator 13a angeordnet.

Die Handwerkzeugmaschine 11 weist eine Luftleitscheibe 63 mit einer Luftleitausnehmung 65 auf, welche dazu vorgesehen ist, den Luftstrom L1 in axialer Richtung durch die Luftleitscheibe 63 zu leiten. Die Luftleitscheibe 63 ist als eine kreisringförmig Scheibe ausgebildet. Die Luftleitausnehmung 65 ist in einem zentralen Bereich angeordnet. Die Lufteinleitöffnung 61 ist in axialer Richtung von einer/der Luftleitscheibe 63 begrenzt. Die Luftleitscheibe 63 schließt in radialer Richtung an das Lagergehäuse 27 an. Die Luftleitscheibe 63 begrenzt die Luftleitöffnung in axialer Richtung. Die Luftleitscheibe 63 ist in einem von dem Umfangsbereich 57 der Lagereinheit 25 abgewandten radial außenliegenden Bereich 33 der Lagereinheit 25 angeordnet. Die Luftleitscheibe 63 ist dazu vorgesehen, den Luftstrom L1 in radialer Richtung zur Antriebsachse A und in axialer Richtung entlang der Antriebsachse A und an der Luftleitscheibe 63 vorbei zu leiten.

Die Luftleitscheibe 63 ist zwischen dem Antriebsstator 13a und dem Lüfterradelement 53 angeordnet. Das Lüfterradelement 53 ist als ein Radiallüfter ausgebildet. Die Luftleitscheibe 63 schließt in radialer Richtung an die Lagereinheit 25 und an die Luftleitöffnung an. Die Luftleitscheibe 63 ist gegenüber der Antriebswelle 13b derart beabstandet, dass der Luftstrom L1 entlang der Antriebswelle 13b durch die Luftleitscheibe 63 geführt wird. Die Luftleitausnehmung 65 nimmt die Antriebswelle 13b auf und bildet zwischen der Antriebswelle 13b und der Luftleitausnehmung 65 einen Luftdruchtritt für den Luftstrom L1. Die Luftleitausnehmung 65 ist dazu vorgesehen, den Luftstrom L1, L2 zwischen der Luftleitscheibe 63 und der Antriebswelle 13b in axialer Richtung zu leiten.

Die Antriebseinheit 13, insbesondere der Antriebsstator 13a, weist an einem Umfangsbereich 57 bzw. an einer Mantelfläche einen Bereich auf, welcher nicht von dem Lagergehäuse 27 umgeben ist.

Das Lagergehäuse 27 weist eine Luftausleitöffnung 65 auf, welche dazu vorgesehen ist, den Luftstrom L1 aus der Lagereinheit 25 heraus zu leiten. Die Luftausleitöffnung 67 ist in einem radialen Abschnitt der Lagereinheit 25 angeordnet. Die Luftausleitöffnung 67 ist in Umfangsrichtung durch eine Stützstruktur 35, insbesondere eine Stützrippe, begrenzt, welche einen radial innenliegenden Bereich 31 der Lagereinheit 25, insbesondere Innenteilkörper, von einem radial außenliegenden Bereich 33 der Lagereinheit 25, insbesondere Außenteilkörper, stützen. Die Luftausleitöffnung 67 ist in radialer Richtung durch den Innenteilkörper, den Außenteilkörper und in einer Umfangsrichtung um die Antriebsachse A durch die Stützrippen 35 begrenzt. Die Stützrippen 35 sind derart ausgestaltet, dass ein möglichst optimales Ausströmen des Luftstroms L1 aus der Lagereinheit 25 ermöglicht wird.

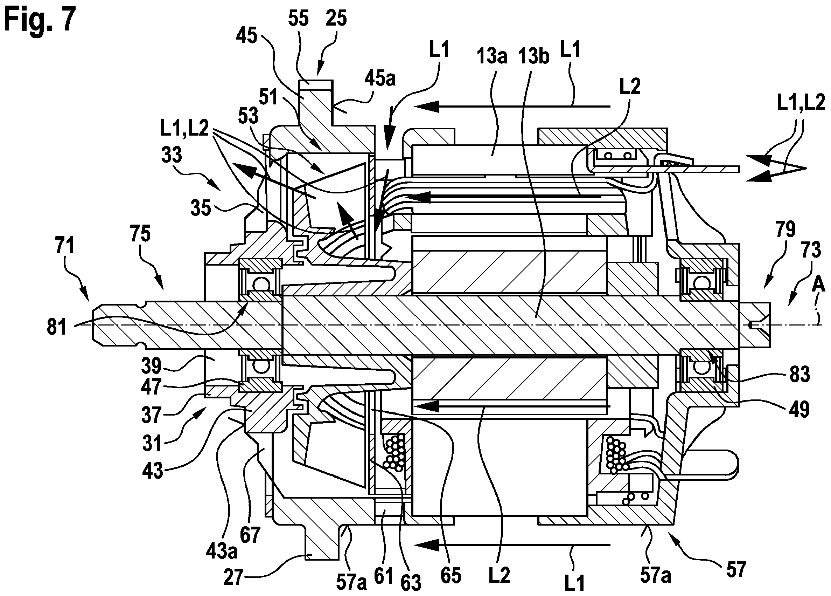

Die Luftleitscheibe 63 ist dazu vorgesehen, einen weiteren Luftstrom L2 in den Luftstrom L1 zu leiten und diese zu verbinden. Die Lufteinleitöffnung 61 ist dazu vorgesehen, einen in die Handwerkzeugmaschine 11 eintretenden Luftstrom L1, L2 in einen ersten Luftstrom L1 und einen zweiten Luftstrom L2 aufzuteilen. Der erste Luftstrom L1 ist dazu vorgesehen, die Antriebseinheit 13 zu umgeben bzw. zu umströmen. Der zweite Luftstrom L2 ist dazu vorgesehen die Antriebseinheit 13 zu durchströmen. Der erste Luftstrom L1 ist um den Umfangsbereich 57 der Antriebseinheit 13 ausgebildet. Der zweite Luftstrom L2 ist zwischen der Antriebswelle 13b und dem Antriebsstator 13a ausgebildet (Fig. 7).

Das erste Gehäuseteil 17 weist eine Begrenzungswand 19 auf, welche zwischen dem ersten Gehäuseteil 17 und dem Lagergehäuse 27 angeordnet ist. Die Begrenzungswand 91 begrenzt den Umfangsbereich 57 in axialer Richtung. Die Begrenzungswand 91 ist dazu vorgesehen, den als Strömungsraum 59 ausgebildeten Umfangsbereich 57 in axialer Richtung gegenüber einem Luftdurchtritt mittels dem ersten Luftstrom L1 abzudichten. Die Begrenzungswand 91 ist als eine in radialer Richtung nach innen abstehende Gehäuseschulter ausgebildet. Die Begrenzungswand 91 schließt vorzugsweise direkt an das Lagergehäuse 27 an.

Die Handwerkzeugmaschine 11 umfasst ferner eine Handwerkzeugmaschinevorrichtung, welche eine geschlossenes Antriebseinheitlagerung bildet. Die Handwerkzeugmaschinenvorrichtung ist als ein geschlossenes Antriebssystem ausgebildet. Die Handwerkzeugmaschinenvorrichtung ist durch die Antriebseinheit 13 mit der Antriebswelle 13b und durch die Lagereinheit 25 zur Lagerung der Antriebseinheit 13 gebildet.

Die Antriebswelle 13b weist ein erstes Ende 71 mit einem Aufnahmebereich 75 zur Aufnahme eines Getriebeelements 77 und mit einem Gewindeelement 80 zur Verbindung des Getriebeelements 77 und ein von dem ersten Ende 71 abgewandtes zweites Ende 73 auf. Das zweite Ende 71 weist einen Drehmomentaufnahmebereich 79 zur Verbindung des Getriebeelements 77 auf.

Der Drehmomentaufnahmebereich 79 ist dazu vorgesehen, in einem Montagezustand ein Drehmoment auf die Antriebswelle 13b aufzubringen bzw. einem auf die Antriebswelle 13b aufgebrachtem Drehmoment ein Gegendrehmoment zu bilden.

Das Gewindeelement 80 ist mittels einer als Wellenmutter ausgebildeten Schraubverbindung mit der Antriebswelle 13b lösbar verbindbar.

Das erste Lagergehäuse 27 umgibt die Antriebseinheit 13 die Antriebswelle 13b an dem ersten Ende 71.

Die Lagerausnehmung 39 weist eine radiale Erstreckung 40 auf, welche um mindestens 3 % kleiner ist, als eine radiale Erstreckung 80 des Gewindeelements 79, sodass eine Montage des Getriebeelements 77 erst dann erfolgen kann, wenn das erste Lagergehäuse 27 mit der Antriebseinheit 13 verbunden ist. Um einem Drehmoment, welches bei einer Schraubverbindung entsteht, entgegenwirken zu können, ist der abstehende Drehmomentaufnahmebereich am zweiten Ende 73 der Antriebswelle 13b vorgesehen. Insbesondere weist die Lagerausnehmung 39 gegenüber einem maximalen Durchmesser des Gewindeelements 79 einen kleineren Durchmesser auf.

Die Lagerausnehmung 39 umgibt eine erste Lageraufnahme 81 umgibt, welche dazu vorgesehen ist, das erstes Lagerungselement 47 zu einer Lagerung der Antriebswelle 13b aufzunehmen. Das erste Lagerungselement 47 ist dabei kraft- und/oder formschlüssig mit ersten Lagergehäuse 27 verbunden. Das erste Lagerungselement 47 ist von dem ersten Lagergehäuse 27 umgeben. Die erste Lageraufnahme 81 ist dazu vorgesehen, eine Festlagerung zu bilden. Das erste Lagerungselement 47, 49 ist dazu vorgesehen, durch eine Wellenschulter einerseits und durch das Getriebeelement 77 andererseits in axialer Richtung angestellt bzw. vorgespannt zu werden.

Der Drehmomentübertragungsbereich 79 steht an dem zweiten Enden 73 in axialer Richtung gegenüber der Lagereinheit 25 einem zweiten Lagergehäuse 27 ab.

Der Drehmomentaufnahmebereich 79 weist ein Mitnahmeprofil auf, welches dazu vorgesehen ist, einen Formschluss für eine Drehmomentaufnahme zu bilden. Das Mitnahmeprofil ist dazu vorgesehen sein, ein Gegenmoment an der zweiten Seite der Antriebswelle 13b aufzubringen, um das Getriebeelement 77 mit der Antriebswelle 13b an dem ersten Ende 71 zu verbinden. Das Mitnahmeprofil weist einen Querschnitt, welches als ein Außensechskant ausgebildet ist.

Es wird weiter vorgeschlagen, dass der Drehmomentaufnahmebereich 79 in axialer Richtung an eine Lageraufnahme 83 zur Aufnahme des zweiten Lagerungselements 49 der Antriebseinheit 13 anschließt.

Der Drehmomentaufnahmebereich 79 weist eine Ausnehmung auf, welche dazu vorgesehen ist, ein Formschlusselement 55 für eine Drehmomentaufnahme zu bilden. Das Formschlusselement 55 ist dazu vorgesehen sein, ein Gegenmoment an der zweiten Seite der Antriebswelle 13b aufzubringen, um das Gewindeelement 80 mit der Antriebswelle 13b an der ersten Seite zu verbinden.

Der Drehmomentaufnahmebereich 79 begrenzt die Antriebswelle 13b in axialer Richtung entlang der Antriebsachse A.

Der Drehmomentaufnahmebereich 79 schließt an eine Lageraufnahme 81 zur Aufnahme eines Lagerungselements 49 der Antriebseinheit 13 an.

Die Lageraufnahme 83 ist von einem zweiten Lagergehäuse 27 umgeben. Die Lageraufnahme 83 ist dazu vorgesehen, eine Loslagerung zu bilden.

Das erste Ende 71 der Antriebswelle 13b das Gewindeelement 80 fliegend gelagert ist.

## Patentansprüche

1. Handwerkzeugmaschine, insbesondere einem Winkelschleifer, mit einer Antriebseinheit (13), mit einem Maschinengehäuse (15) umfassend ein als Getriebegehäuse ausgebildetes erstes Gehäuseteil (17) und ein die Antriebseinheit (13) umgebendes zweites Gehäuseteil (19), und mit einer Lagereinheit (25), insbesondere einem Lagergehäuse (27), zur Lagerung der Antriebseinheit (13), **dadurch gekennzeichnet, dass** die Lagereinheit (25) in das erste Gehäuseteil (17) hineinragt, wobei die Lagereinheit, insbesondere ein Lagergehäuse, dazu vorgesehen ist, die Antriebseinheit drehfest mit dem ersten Gehäuseteil und/oder dem zweiten Gehäuseteil zu verbinden.

2. Handwerkzeugmaschine nach Anspruch 1, **dadurch gekennzeichnet, dass** das erste Gehäuseteil (17) und/oder das zweite Gehäuseteil (19) die Lagereinheit (25) in axialer Richtung, insbesondere vollständig, überlappen.

3. Handwerkzeugmaschine nach einem der vorhergehenden Ansprüche, **dadurch gekennzeichnet, dass** die Lagereinheit (25) zwischen dem ersten Gehäuseteil (17) und dem zweiten Gehäuseteil (19) gelagert, insbesondere in axialer Richtung vorgespannt, ist.

4. Handwerkzeugmaschine nach einem der vorhergehenden Ansprüche, **dadurch gekennzeichnet, dass** die Lagereinheit (25) dazu vorgesehen ist, sich in axialer Richtung in einem radial innenliegenden Bereich (31) an dem ersten Gehäuseteil (17) und in einem radial außenliegenden Bereich (33) an dem zweiten Gehäuseteil (19) abzustützen.

5. Handwerkzeugmaschine nach einem der vorhergehenden Ansprüche, **dadurch gekennzeichnet, dass** die Lagereinheit (25) ein Zentrierelement (37) aufweist.

6. Handwerkzeugmaschine nach einem der vorhergehenden Ansprüche, **dadurch gekennzeichnet, dass** die Lagereinheit (25), insbesondere das Lagergehäuse (27), ein erstes Anschlagselement (43) aufweist.

7. Handwerkzeugmaschine nach einem der vorhergehenden Ansprüche, **dadurch gekennzeichnet, dass** die Lagereinheit (25) und/oder die Antriebseinheit (13) fliegend gelagert ist.

8. Handwerkzeugmaschine nach einem der vorhergehenden Ansprüche, **dadurch gekennzeichnet, dass** die Lagereinheit (25) ein erstes Lagerungselement (47), insbesondere ein Wälzlagerungselement, aufweist, welches dazu vorgesehen ist, eine/die Antriebswelle (13b) der Antriebseinheit (13) zu lagern.

9. Handwerkzeugmaschine nach Anspruch 8, **dadurch gekennzeichnet, dass** das erste Lagerungselement (47), insbesondere in axialer Richtung, durch ein Lagergehäuse (27) der Lagereinheit (25) von dem ersten Gehäuseteil (17), insbesondere dem Getriebegehäuse, getrennt ist.

10. Handwerkzeugmaschine nach einem der vorhergehenden Ansprüche, **dadurch gekennzeichnet, dass** das Lagergehäuse (27) der Lagereinheit (25) aus einem Kunststoff gebildet ist.

11. Handwerkzeugmaschine nach einem der Ansprüche 8 bis 10, **dadurch gekennzeichnet, dass** das erste Lagerungselement (47) gegenüber dem ersten Anschlagselement (43) in axialer Richtung weiter in das erste Gehäuseteil (17) hineinragt.

12. Handwerkzeugmaschine nach einem der vorhergehenden Ansprüche, **gekennzeichnet durch** eine Lüftereinheit (51), welche zwischen dem ersten Lagerungselement (47) und der Antriebseinheit (13), insbesondere dem Antriebsstator (13a), angeordnet ist.

13. Handwerkzeugmaschine nach einem der vorhergehenden Ansprüche, **dadurch gekennzeichnet, dass** die Lagereinheit (25) ein Formschlusselement (55) aufweist, welches dazu vorgesehen ist, die Lagereinheit (25) gegenüber dem ersten Gehäuseteil (17) und/oder dem zweiten Gehäuseteil (19) zu halten.

## Claims

1. Hand-held power tool, in particular an angle grinder, with a drive unit (13), with a machine housing (15) comprising a first housing part (17), configured as a gear housing, and a second housing part (19), surrounding the drive unit (13), and with a bearing unit (25), in particular a bearing housing (27), for mounting the drive unit (13), **characterized in that** the bearing unit (25) protrudes into the first housing part (17), the bearing unit, in particular a bearing housing, being provided to connect the drive unit fixedly to the first housing part and/or the second housing part for conjoint rotation.

2. Hand-held power tool according to Claim 1, **characterized in that** the first housing part (17) and/or the second housing part (19) overlap/overlaps the bearing unit (25) in the axial direction, in particular completely.

3. Hand-held power tool according to either of the preceding claims, **characterized in that** the bearing unit (25) is mounted, in particular prestressed in the axial direction, between the first housing part (17) and the second housing part (19).

4. Hand-held power tool according to one of the preceding claims, **characterized in that** the bearing unit (25) is provided to be supported in the axial direction in a radially inner region (31) on the first housing part (17) and in a radially outer region (33) on the second housing part (19).

5. Hand-held power tool according to one of the preceding claims, **characterized in that** the bearing element (25) has a centring element (37).

6. Hand-held power tool according to one of the preceding claims, **characterized in that** the bearing unit (25), in particular the bearing housing (27), has a first stop element (43).

7. Hand-held power tool according to one of the preceding claims, **characterized in that** the bearing unit (25) and/or the drive unit (13) are/is cantilever-mounted.

8. Hand-held power tool according to one of the preceding claims, **characterized in that** the bearing unit (25) has a first bearing element (47), in particular an anti-friction bearing element, which is provided to mount a/the drive shaft (13b) of the drive unit (13).

9. Hand-held power tool according to Claim 8, **characterized in that** the first bearing element (47) is separated from the first housing part (17), in particular the gear housing, in particular in the axial direction, by way of a bearing housing (27) of the bearing unit (25) .

10. Hand-held power tool according to one of the preceding claims, **characterized in that** the bearing housing (27) of the bearing unit (25) is formed from a plastic.

11. Hand-held power tool according to one of Claims 8 to 10, **characterized in that** the first bearing element (47) protrudes further in the axial direction into the first housing part (17) than the first stop element (43).

12. Hand-held power tool according to one of the preceding claims, **characterized by** a fan unit (51) which is arranged between the first bearing element (47) and the drive unit (13), in particular the drive stator (13a) .

13. Hand-held power tool according to one of the preceding claims, **characterized in that** the bearing unit (25) has a positively locking element (55) which is provided to hold the bearing unit (25) with respect to the first housing part (17) and/or the second housing part (19).

## Revendications

1. Machine-outil portative, notamment meuleuse d'angle, avec une unité d'entraînement (13), avec un carter de machine (15) comprenant une première partie de carter (17) réalisée en tant que carter de transmission et une deuxième partie de carter (19) entourant l'unité d'entraînement (13), et avec une unité de palier (25), notamment un carter de palier (27), pour le montage de l'unité d'entraînement (13), **caractérisée en ce que** l'unité de palier (25) pénètre dans la première partie de carter (17), l'unité de palier, notamment un carter de palier, étant prévue pour relier l'unité d'entraînement à la première partie de carter et/ou à la deuxième partie de carter de manière solidaire en rotation.

2. Machine-outil portative selon la revendication 1, **caractérisée en ce que** la première partie de carter (17) et/ou la deuxième partie de carter (19) chevauchent l'unité de palier (25) dans la direction axiale, notamment complètement.

3. Machine-outil portative selon l'une quelconque des revendications précédentes, **caractérisée en ce que** l'unité de palier (25) est montée, notamment précontrainte dans la direction axiale, entre la première partie de carter (17) et la deuxième partie de carter (19) .

4. Machine-outil portative selon l'une quelconque des revendications précédentes, **caractérisée en ce que** l'unité de palier (25) est prévue pour s'appuyer dans la direction axiale dans une zone radialement intérieure (31) sur la première partie de carter (17) et dans une zone radialement extérieure (33) sur la deuxième partie de carter (19).

5. Machine-outil portative selon l'une quelconque des revendications précédentes, **caractérisée en ce que** l'unité de palier (25) présente un élément de centrage (37) .

6. Machine-outil portative selon l'une quelconque des revendications précédentes, **caractérisée en ce que** l'unité de palier (25), notamment le carter de palier (27), présente un premier élément de butée (43).

7. Machine-outil portative selon l'une quelconque des revendications précédentes, **caractérisée en ce que** l'unité de palier (25) et/ou l'unité d'entraînement (13) est montée en porte-à-faux.

8. Machine-outil portative selon l'une quelconque des revendications précédentes, **caractérisée en ce que** l'unité de palier (25) présente un premier élément de palier (47), notamment un élément de palier à roulement, qui est prévu pour monter un/l'arbre d'entraînement (13b) de l'unité d'entraînement (13).

9. Machine-outil portative motorisé selon la revendication 8, **caractérisée en ce que** le premier élément de palier (47) est séparé, notamment dans la direction axiale, par un carter de palier (27) de l'unité de palier (25) de la première partie de carter (17), notamment du carter de transmission.

10. Machine-outil portative selon l'une quelconque des revendications précédentes, **caractérisée en ce que** le carter de palier (27) de l'unité de palier (25) est formé d'une matière plastique.

11. Machine-outil portative selon l'une quelconque des revendications 8 à 10, **caractérisée en ce que** le premier élément de palier (47) pénètre davantage dans la première partie de carter (17) dans la direction axiale par rapport au premier élément de butée (43).

12. Machine-outil portative selon l'une quelconque des revendications précédentes, **caractérisée par** une unité de ventilation (51) qui est agencée entre le premier élément de palier (47) et l'unité d'entraînement (13), notamment le stator d'entraînement (13a).

13. Machine-outil portative selon l'une quelconque des revendications précédentes, **caractérisée en ce que** l'unité de palier (25) présente un élément de complémentarité de forme (55) qui est prévu pour maintenir l'unité de palier (25) par rapport à la première partie de carter (17) et/ou à la deuxième partie de carter (19).
